# EUROPEAN PATENT APPLICATION

(11) **EP 4 019 106 A1**
(43) Date of publication of application: **29.06.2022**
(21) Application number: 20216950.4
(22) Date of filing: 23.12.2020
(51) Int. Cl.: B01D 9/00

(54) **CRYSTALLISER, METHOD FOR CRYSTALLISING AND USE OF THE CRYSTALLISER IN PERFORMING THE METHOD**

(71) Applicant: Yara International ASA, 0277 Oslo (NO)
(72) Inventor: Bujalski, Jakub, 3914 Porsgrunn (NO); Louwe, Robertus, 3933 Porsgrunn (NO); Lier, Olav, 3917 Porsgrunn (NO)
(74) Representative: De Clercq & Partners

(57) **Abstract**

The present disclosure relates to a vertically positioned crystalliser (1) comprising at least one upwards flowing section (5) for cooling the upwards flowing composition physically separated from at least one downwards flowing section (6) for transporting a crystal slurry of crystallised solids from the composition downwards; the crystalliser (1) further comprising:
• at least one composition inlet (3) for introducing a composition comprising at least a liquid and solids dissolved in said liquid;
• at least one cooling inlet (4) for introducing a cooling liquid;
• a bottom section (7) where the downwards flowing section (6) and the upwards flowing section (5) fluidically join comprising at least one outlet (9) for collecting the crystal slurry; and;
• a top section (8) where the upwards flowing section (5) and the downwards flowing section (6) fluidically join comprising at least one outlet (10) for collecting the cooling liquid in gaseous state;

wherein the at least one composition inlet (3) and the at least one cooling inlet (4) are located in the vertically positioned crystalliser (1) such that in the at least one upwards flowing section (5) the cooling liquid and the composition are co-currently flowing upwards.

## Description

### FIELD OF THE INVENTION

The present disclosure relates to the field of crystalliser apparatuses. It further relates to the field of methods for crystallising and to the use of crystallisers for performing those methods.

### BACKGROUND

Crystallisation is the natural or artificial process by which a solid forms, where the atoms or molecules are highly organized into a structure known as a crystal. Some of the ways by which crystals form are precipitating from a solution, freezing, or more rarely deposition directly from a gas. Attributes of the resulting crystal depend largely on factors such as temperature, air pressure, and in the case of liquid crystals, time of fluid evaporation.

Crystallisation occurs in two major steps. The first is nucleation, the appearance of a crystalline phase from either a supercooled liquid or a supersaturated solvent. The second step is known as crystal growth, which is the increase in the size of particles and leads to a crystal state. An important feature of this step is that loose particles form layers at the crystal's surface and lodge themselves into open inconsistencies such as pores, cracks or their equivalents.

Crystallisation is also a chemical solid-liquid separation technique, in which mass transfer of a solute from the liquid solution to a pure solid crystalline phase occurs. In chemical engineering, crystallisation occurs in a crystalliser. Crystallisation is therefore related to precipitation, although the result is not an amorphous or disordered substance, but a crystal.

A possibility to achieve crystallisation is to cool the solution from which crystals are to be formed. This cooling can be achieved through either direct or indirect heat transfer. In indirect heat transfer, a coolant and the solution to be cooled are circulated in separate closed chambers without direct physical contact, for example in a heat exchanger. In direct heat transfer, the coolant and the solution to be cooled are brought into direct physical contact, in a single compartment that is the crystallisation chamber of the crystalliser.

GB932215 (Cerny, 1960) discloses a continuous process for the crystallisation of calcium nitrate tetrahydrate from the aqueous solutions obtained by decomposing rock phosphates with nitric acid, by cooling said solutions with an inert liquid having lower density than and immiscible with the solutions, said cooling liquid being introduced directly into said solutions to cool same to the crystallisation temperature of +10 to -25 °C, and heated and/or evaporated by the contact therewith so that the solutions are agitated and circulated by the ascending cooling liquid or by its vapours, characterised in that the cooling liquid is introduced dropwise at the bottom of a perpendicularly arranged cylindrical body place concentrically in the vessel in order to maintain the suspension of the growing crystals in a vertical circulation, the crystals when having grown mainly to a size of from 0.4 mm to 1.00 mm, sedimenting on the bottom of the vessel and being drawn off together with the mother liquor. The cooling of the crystallisation bath to the required crystallisation temperature of +10 to -25 °C and the transfer of the heat of crystallisation is attained either by evaporating the liquid within the crystallisation bath or on its surface, or in warming the frigorific liquid. The evaporated frigorific substance or the warmed frigorific liquid with a temperature of -5 to +10 °C is drained off at the top part of the crystalliser to a cooling device. In the cooling device the vapours of the frigorific liquid are condensed at a temperature of -10 to -35 °C, or in case of liquid, the same is cooled to a temperature of -10 to -35 °C. From the cooling device the frigorific liquid is returned to the crystalliser by means of a pump. The fresh solution of phosphates decomposed by nitric acid cooled with water to a temperature of 20 to 30 °C is continuously fed in at the top in the crystalliser. The refrigerated solution with calcium nitrate tetrahydrate crystals is continuously drained off from the bottom of the crystalliser. As a frigorific liquid, in the case where the heat from the crystallisation bath is taken away by evaporation, it is possible to use for instance butane, propane, propane-butane mixture, or fluorinated lower alkanes. In the case where the heat from the crystallisation bath is taken off by the frigorific liquid being warmed up, there can be used petrol free from unsaturated and aromatic fractions, saturated hydrocarbons, or non-hydrolysable halogenated hydrocarbons.

US4452621 (Mobil Oil Corporation, 1984) discloses a crystallisation process that is improved by employing direct contact cooling whereby a volatile liquid is vaporized to provide the cooling necessary to effect the crystallisation. The effluent vapours of the volatile liquid may be liquified and recycled for reuse by manipulation of temperature and/or pressure. In one embodiment, durene is crystallised from a C10 aromatics fraction using liquified n-butane as the coolant.

In order to reduce the crystallisation time and thereby improve the process capacity and/or efficiency, it is essential to optimize the crystallisation efficiency. It is particularly important to ensure that the consumption of the cooling agent is minimised and that the crystallisation yield from the solution from which crystallisation is to be performed is maximised. In other words, the maximum crystal formation should be achieved at the minimum consumption of the cooling agent. In addition, the chosen cooling agent should provide the proper cooling conditions under optimal pressure and temperature conditions, at the same time as being compatible with the solution, which means that the crystallisation process should be safe to perform.

### SUMMARY

In a first aspect of the disclosure, a crystalliser is disclosed. The crystalliser is a vertically positioned crystalliser (1) comprising at least one upwards flowing section (5) for cooling the upwards flowing composition physically separated from at least one downwards flowing section (6) for transporting a crystal slurry of crystallised solids from the composition downwards; the crystalliser (1) further comprising:
- at least one composition inlet (3) for introducing a composition comprising at least a liquid and solids dissolved in said liquid;
- at least one cooling inlet (4) for introducing a cooling liquid;
- a bottom section (7) where the downwards flowing section (6) and the upwards flowing section (5) fluidically join comprising at least one outlet (9) for collecting the crystal slurry; and;
- a top section (8) where the upwards flowing section (5) and the downwards flowing section (6) fluidically join comprising at least one outlet (10) for collecting the cooling liquid in gaseous state;
wherein the at least one composition inlet (3) and the at least one cooling inlet (4) are located in the vertically positioned crystalliser (1) such that in the at least one upwards flowing section (5) the cooling liquid and the composition are co-currently flowing upwards.

In a particular embodiment, the crystalliser comprises a vertically positioned loop-shaped conduit which comprises a composition inlet for introducing a composition comprising at least a liquid and solids dissolved in the liquid; a cooling inlet for introducing a cooling liquid; one upwards flowing section for cooling the upwards flowing composition through contact with the co-currently upwards flowing cooling liquid; one downwards flowing section for transporting a crystal slurry of crystallised solids from the composition downwards; a bottom section joining the downwards flowing section and the upwards flowing section; a top section joining the upwards flowing section and the downwards flowing section; an outlet at the bottom section for collecting the crystal slurry; and an outlet at the top section for collecting the cooling liquid in its gaseous state, after it has been converted into a gaseous state through heat exchange with the composition; wherein the composition and the cooling liquid are respectively introduced in the composition inlet and the cooling inlet such that the composition and the cooling liquid flow in the loop-shaped conduit in a co-current manner.

In an alternative embodiment, the crystalliser comprises a vertically positioned cylindrical vessel having a cylindrical body centred inside the cylindrical vessel and open at both upper and lower ends. The cylindrical vessel comprises a composition inlet for introducing a composition comprising at least a liquid and solids dissolved in the liquid; a cooling inlet for introducing a cooling liquid; one upwards flowing section for cooling the upwards flowing composition through contact with the co-currently upwards flowing cooling liquid; one downwards flowing section for transporting a crystal slurry of crystallised solids from the composition downwards; a bottom section joining the downwards flowing section and the upwards flowing section; a top section joining the upwards flowing section and the downwards flowing section; an outlet at the bottom section for collecting the crystal slurry; and an outlet at the top section for collecting the cooling liquid in its gaseous state, after it has been converted into a gaseous state through heat exchange with the composition; wherein the composition and the cooling liquid are respectively introduced in the composition inlet and the cooling inlet such that the composition and the cooling liquid flow in the loop-shaped conduit in a co-current manner

In a second aspect of the disclosure, a method for crystallising solids from a composition comprising at least a liquid and solids dissolved in the liquid is disclosed. The method comprises the steps of: a) feeding a cooling liquid to a cooling inlet and a composition comprising at least a liquid and solids dissolved in the liquid to a composition inlet of a crystalliser according to any of the crystallisers of the present disclosure; b) collecting the cooling liquid converted into a gaseous state at the outlet at the top section of the crystalliser; and c) collecting a crystal slurry at the outlet at the bottom section of the crystalliser.

In a third aspect of the disclosure, the use of any of the crystallisers of the present disclosure for performing a method for crystallising according to the present disclosure, is disclosed.

### LIST OF FIGURES

**Figure 1** shows a schematic representation of a loop-shaped conduit 2 according to the first aspect of the disclosure
**Figure 2** shows a schematic representation of a crystalliser 1 according to the first aspect of the disclosure and comprising a compressor 11
**Figure 3A** shows a schematic representation of a crystalliser 1 according to the first aspect of the disclosure and comprising multiple upwards flowing sections 5
**Figure 3B** shows a schematic representation of a crystalliser 1 according to the first disclosure and comprising multiple downwards flowing sections 6
**Figure 3C** shows a schematic representation of a crystalliser 1 according to the first aspect of the disclosure and comprising multiple upwards flowing sections 5
**Figure 3D** shows a schematic representation of a crystalliser 1 according to the first aspect of the disclosure and comprising multiple downwards flowing sections 6
**Figure 4** shows a flow diagram of the crystallisation step of the Odda, nitro-phosphate process utilising any crystalliser according to the disclosure

**Table of numerals**

| | | | |
|---|---|---|---|
| 1 | crystalliser | 16 | first outlet of separator |
| 2 | loop-shaped conduit | 17 | second outlet of separator |
| 3 | inlet for composition | 18 | heating means |
| 4 | inlet for cooling liquid | 19 | breaking means |
| 5 | upwards flowing section | 20 | cooling system |
| 6 | downwards flowing section | 21 | cooler |
| 7 | bottom section | 22 | means for exchanging heat |
| 8 | top section | 23 | cooling liquid tank |
| 9 | outlet for crystal slurry | 24 | nitro-phosphate digestion liquor tank |
| 10 | outlet for gas after evaporation of cooling liquid | 25 | filters for calcium nitrate tetrahydrate crystallised in the nitro-phosphate process |
| 11 | gas compressor | 26 | cylindrical vessel |
| 12 | inlet of gas compressor | 27 | pump |
| 13 | outlet of gas compressor | 28 | cylindrical body open at both upper and lower ends |
| 14 | separator | 29 | agitator |
| 15 | inlet of separator | | |

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawings), or to any novel one, or any novel combination, of the steps of any method or process so disclosed.

The enumeration of numeric values by means of ranges of figures comprises all values and fractions in these ranges, as well as the cited end points. The term "ranges from ... to " as used when referring to a range for a measurable value, such as a parameter, an amount, a time period, and the like, is intended to include the limits associated to the range that is disclosed.

By way of example, embodiments of the crystalliser will be discussed using the following figures, where the numerals refer to the same or a similar features in the figures.

In a first aspect the present disclosure relates to a vertically positioned crystalliser (1) comprising at least one upwards flowing section (5) for cooling the upwards flowing composition physically separated from at least one downwards flowing section (6) for transporting a crystal slurry of crystallised solids from the composition downwards; the crystalliser (1) further comprising:
- at least one composition inlet (3) for introducing a composition comprising at least a liquid and solids dissolved in said liquid;
- at least one cooling inlet (4) for introducing a cooling liquid;
- a bottom section (7) where the downwards flowing section (6) and the upwards flowing section (5) fluidically join comprising at least one outlet (9) for collecting the crystal slurry; and;
- a top section (8) where the upwards flowing section (5) and the downwards flowing section (6) fluidically join comprising at least one outlet (10) for collecting the cooling liquid in gaseous state;
wherein the at least one composition inlet (3) and the at least one cooling inlet (4) are located in the vertically positioned crystalliser (1) such that in the at least one upwards flowing section (5) the cooling liquid and the composition are co-currently flowing upwards.

The co-currently upwards flowing of the cooling liquid and the composition can be attained in a number of ways. In a particular embodiment the crystalliser (1) as disclosed herein comprises:
- at least one vertically positioned loop-shaped conduit (2), said loop-shaped conduit (2) comprising the at least one upwards flowing section (5); or
- two or more vertically positioned loop-shaped conduits (2) comprising two or more upwards flowing sections (5) and a single common downwards flowing section (6); or
- two or more vertically positioned loop-shaped conduits (2) comprising two or more downwards flowing sections (6) and a single common upwards flowing section (5).

By providing one or more loop-shaped conduits the upwards flowing section (5) and downwards flowing section (6) are physically separated from each other, fluidically joining each other only at the bottom section (7) and the top section (8).

In an alternative embodiment the crystalliser (1) as disclosed herein comprises a vertically positioned cylindrical vessel (26) comprising a cylindrical body (28) centred inside said cylindrical vessel (26) and open at both upper and lower ends physically separating the upwards flowing section (5) from the downwards flowing section (6).

Contrary to the prior art GB932215 (Cerny, 1960) and US4452621, the composition and the cooling liquid flow co-currently in the crystalliser 1 of the disclosure. The cooling liquid and the composition are respectively introduced in the inlets 4 and 3. The liquids from the crystal slurry, after separation of the crystal slurry, returning from the downwards flowing section 6 to the upwards flowing section 5, drive the composition upwards in the upwards flowing section 5. In addition, as the cooling liquid is warmed-up upon contact with the composition, part of it starts evaporating and producing gas bubbles. The result is, therefore, that both the cooling liquid, as part of it evaporates, and the composition flow in an upwards direction, in the upwards flowing section 5 of the crystalliser 1. The composition is being cooled down, through contact with the cooling liquid, the solids dissolved in the composition start crystallising, resulting in the production of a crystal slurry. The composition and the cooling liquid eventually reach the top section 8. At this top section 8 are present the composition and cooling liquid, as well as a gas resulting from the evaporation of the cooling liquid and crystals, resulting from the crystallisation of the dissolved solids in the composition. Said otherwise, at this top section 8, there is a mixture of the crystal slurry and a gas and the liquids of the crystal slurry comprise any remaining non-evaporated cooling liquid and the composition with non-crystallised, therefore still dissolved, solids. As the gas is lighter than the crystal slurry, the gas escapes through the outlet 10, resulting in the convenient separation of the gas from the crystal slurry. On the other hand, the crystal slurry flows downwards, in the downwards flowing section 6. Once the crystal slurry reaches the bottom section 7, the crystals heavier than the liquids of the crystal slurry, settle down and can be collected at the outlet 9. The crystals lighter than the liquids of the crystal slurry do not settle and are recycled. It further results a buoyancy effect which drives the liquids and the lighter crystals of the crystal slurry towards the upwards flowing section 5. As a result, the liquids and some crystals of the crystal slurry are recycled within the upwards flowing section 5, which maximises the yield of crystals: dissolved solids not crystallised in a first trajectory can crystallise, from the recycled crystals acting as nucleation seeds, in a subsequent trajectory. The buoyancy effect and the recycling of the liquids and some crystals of the crystal slurry further provides additional force for driving the cooling liquid and the composition upwards, in the upwards flowing section 5. The crystalliser therefore has the advantages that both easy gas separation from the crystal slurry and maximisation of the crystallisation yield are achieved. In a particular embodiment the crystalliser (1) as disclosed herein provides that the composition inlet (3) and the cooling inlet (4) are located in the upwards flowing section (5).

In a particular embodiment the crystalliser (1) as disclosed herein provides that the cooling inlet (4) is located upstream from the composition inlet (3).

In a particular embodiment the crystalliser (1) as disclosed herein further comprises a gas compressor (11) upstream from outlet (10), for compressing cooling liquid in gaseous state and reintroducing said cooling liquid in said crystallizer (1) through cooling inlet (4).

In a particular embodiment the crystalliser (1) as disclosed herein further comprises a separator (14) for separating the gas collected at the outlet (10), at the top section (8), from any crystal slurry carried over at the outlet (10), wherein the separator (14) comprises:
an inlet (15) in fluid communication with the outlet (10) at the top section (8); and, in particular;
a first outlet (16) for a gas in fluid communication with the inlet (12) of the gas compressor (11); and
a second outlet (17) for the crystal slurry in fluid communication with the first inlet (3) of the crystalliser (1).

In a particular embodiment the crystalliser (1) as disclosed herein further comprises heating means (18) for supplying heat to at least part of the walls of the upwards flowing section (5).

In a particular embodiment the crystalliser (1) as disclosed herein further comprises breaking means (19) in the vicinity of outlet (9) at the bottom section (7), for breaking the crystals of the crystal slurry.

In a second aspect the present disclosure provides in a method for crystallising solids from a composition comprising at least a liquid and solids dissolved in the liquid, comprising the steps of:
(a) feeding a cooling liquid to a cooling inlet (4) and the composition comprising at least a liquid and solids dissolved in the liquid to a composition inlet (3) of a crystalliser (1) as disclosed herein;
(b) collecting the cooling liquid converted into a gaseous state at the outlet (10) at the top section (8) of the crystalliser (1); and
(c) collecting a crystal slurry at the outlet (9) at the bottom section (7) of the crystalliser (1).

In a particular embodiment the method as disclosed herein provides that the cooling liquid in step (a) is liquid CO₂ and is pressurized to a pressure ranging from 10 to 35 bars.

In a particular embodiment the method as disclosed herein further comprises the steps of:
(d) compressing the gas collected in step (b) using a gas compressor (11), thereby obtaining a cooling liquid; and
(e) repeating step (a) with the cooling liquid obtained in step (d).

In a particular embodiment the method as disclosed herein further comprises the steps of:
(f) separating the gas collected at the outlet (10) from any crystal slurry carried over at the outlet (10) in a separator (14).

In a particular embodiment the method as disclosed herein further comprises the steps of:
(g) supplying heat by using heating means (18) to at least part of the walls of the upwards flowing section (5).

In a particular embodiment the method as disclosed herein further comprises the steps of:
(j) breaking the crystals of the crystal slurry by using breaking means (19).

In a particular embodiment the method as disclosed herein provides that the composition is obtained by digesting a phosphate rock or a mixture of phosphate rocks in nitric acid and wherein the crystals formed are calcium nitrate tetra-hydrate crystals.

In a particular embodiment the method as disclosed herein is performed in a continuous manner and steps (a), (b) and (c) are performed simultaneously.

In a third aspect the present disclosure provides in the use of a crystalliser (1) as disclosed herein for performing a method for crystallising as disclosed herein.

In a particular embodiment the use as disclosed herein provides in the crystallisation of calcium nitrate tetrahydrate crystals from a nitrophosphate digestion liquor comprising nitric acid, phosphoric acid and dissolved calcium nitrate tetrahydrate.

### Crystalliser

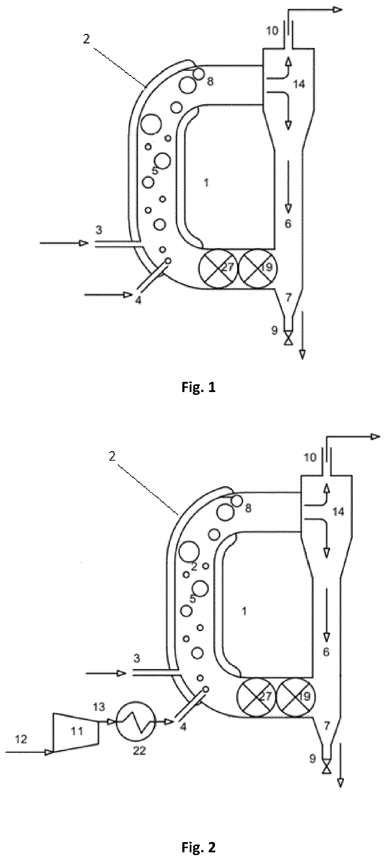

With reference to Figure 1, in a particular aspect of the disclosure, a crystalliser 1 is disclosed. The crystalliser comprises a vertically positioned loop-shaped conduit 2 which comprises a composition inlet 3 for introducing a composition comprising at least a liquid and solids dissolved in the liquid; a cooling inlet 4 for introducing a cooling liquid; one upwards flowing section 5 for cooling the upward flowing composition through contact with the co-currently upwards flowing cooling liquid; one downwards flowing section 6 for transporting a crystal slurry of crystallised solids from the composition downwards; a bottom section 7 joining the downwards flowing section 6 and the upwards flowing section 5; a top section 8 joining the upwards flowing section 5 and the downwards flowing section 6; an outlet 9 at the bottom section 7 for collecting the crystal slurry; and an outlet 10 at the top section 8 for collecting the cooling liquid in its gaseous state, after it has been converted into a gaseous state through heat exchange with the composition; wherein the composition and the cooling liquid are respectively introduced in the composition inlet (3) and the cooling inlet (4) such that the composition and the cooling liquid flow in the loop-shaped conduit (2) in a co-current manner.

Contrary to the prior art GB932215 (Cerny, 1960) and US4452621, the composition and the cooling liquid flow co-currently in the crystalliser 1 of the disclosure. Indeed, the crystalliser 1 comprises a vertically positioned loop-shaped conduit 2. The cooling liquid and the composition are respectively introduced in the inlets 4 and 3. The liquids from the crystal slurry, after separation of the crystal slurry, returning from the downwards flowing section 6 to the upwards flowing section 5, drive the composition upwards in the upwards flowing section 5. In addition, as the cooling liquid is warmed-up upon contact with the composition, part of it starts evaporating and producing gas bubbles. The result is, therefore, that both the cooling liquid, as part of it evaporates, and the composition flow in an upwards direction, in the upwards flowing section 5 of the loop-shaped conduit 2. Both inlets 3 and 4 are preferably located in the upwards flowing section and the inlet 4 is preferably located upstream the inlet 3, in order to facilitate the upwards driving of the composition, in the upwards flowing section 5 being driven upwards. Optionally, the presence of a pump 27 may further facilitate the flow in the upwards flowing section. The composition is being cooled down, through contact with the cooling liquid, the solids dissolved in the composition start crystallising, resulting in the production of a crystal slurry.

The composition and the cooling liquid eventually reach the top of the loop-shaped section 2, the top section 8. At this top section 8 are present the composition and cooling liquid, as well as a gas resulting from the evaporation of the cooling liquid and crystals, resulting from the crystallisation of the dissolved solids in the composition. Said otherwise, at this top section 8, there is a mixture of the crystal slurry and a gas and the liquids of the crystal slurry comprise any remaining non-evaporated cooling liquid and the composition with non-crystallised, therefore still dissolved, solids.

As the gas is lighter than the crystal slurry, the gas escapes through the outlet 10, resulting in the convenient separation of the gas from the crystal slurry. On the other hand, the crystal slurry flows downwards, in the downwards flowing section 6 of the loop-shaped conduit 2. Once the crystal slurry reaches the bottom section 7 of the loop-shaped conduit 2, the crystals heavier than the liquids of the crystal slurry, settle down and can be collected at the outlet 9. The crystals lighter than the liquids of the crystal slurry do not settle and be recycled in the loop. It further results a buoyancy effect which drives the liquids and the lighter crystals of the crystal slurry towards the upwards flowing section 5. As a result, the liquids and some crystals of the crystal slurry are recycled within the loop-shaped conduit 2, which maximises the yield of crystals: dissolved solids not crystallised in a single loop trajectory can crystallise, from the recycled crystals acting as nucleation seeds, in a subsequent loop trajectory. The buoyancy effect and the recycling of the liquids and some crystals of the crystal slurry further provides additional force for driving the cooling liquid and the composition upwards, in the upwards flowing section 5. Optionally, the separation of the crystals at the bottom section 7, rather than being accomplished naturally based on the weight of the crystals, may be accomplished by classifying means (not shown). The classifying means classify the crystals according to their size and separate the crystals of a sufficiently large size, as established by the end user of the crystalliser, and direct those crystals to the outlet 9,whereas the remaining crystals are recycled in the loop-shaped conduit 2.

The crystalliser therefore has the advantages that, through the loop-shaped conduit, both easy gas separation from the crystal slurry and maximisation of the crystallisation yield are achieved.

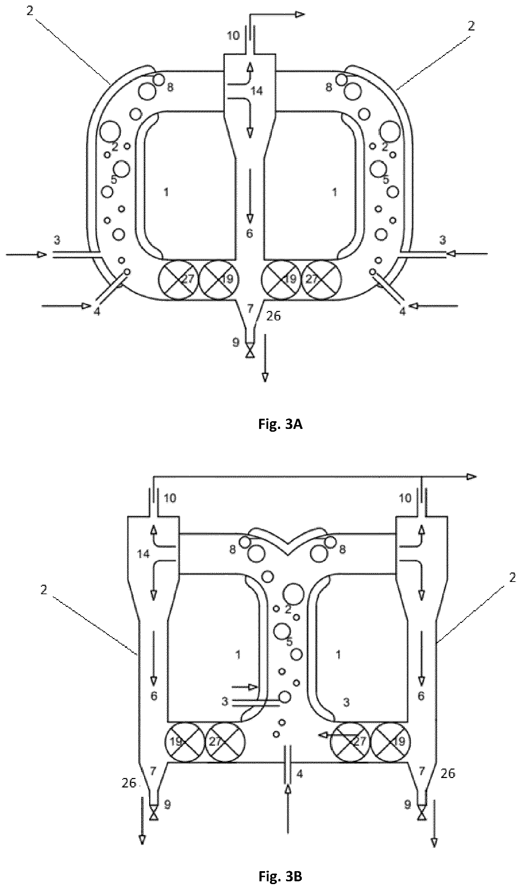

Referring to Figures 3A and 3B, according to one embodiment of the crystalliser of the first aspect of the disclosure, the crystalliser comprises two vertically positioned loop-shaped 2 conduits having the two upwards flowing sections 5 joined by a common downwards flowing section 6 (Figure 3A), or having the two downwards flowing sections 6 joined by a common upwards flowing section 5 (Figure 3B). This embodiment can be extended to more than two upwards and downwards flowing sections to optimize the crystallisation : by optimising the ratio of the volume in the upward flowing section 5 over the volume in the downward flowing section 6, the ratio of the corresponding residence times is optimised and, thereby, the initialisation of crystallisation, the nucleation, is optimised in the upwards flowing section 5 and the crystal growth is optimised in the downwards flowing section 6 . An optimal ratio of the volume in the upward flowing section 5 over the volume in the downward flowing section 6 may range from 0.001 to 1000, or from 0.01 to 100, or from 0.1 to 10. In addition, the presence of additional upwards or downwards flowing section allows for a process using the crystalliser of the disclosure to be performed on a larger scale, resulting in an increased production of the crystallised product.

In a particular embodiment, the crystalliser comprises two or more vertically positioned loop-shaped 2 conduits having the two or more upwards flowing sections 5 joined by a common downwards flowing section 6 (Figure 3A showing 2 conduits ). The crystalliser comprises a single outlet 9 for the crystal slurry and a single outlet 10 for the gas after evaporation of the cooling liquid. The outlets 9 and 10 are respectively located at the bottom and the top of the common downwards flowing section 6.

In a particular embodiment, the crystalliser 1 comprises two or more vertically positioned loop-shaped 2 conduits having the two or more downwards flowing sections 5 joined by a common upwards flowing section 6 (Figure 3B showing 2 conduits). The crystalliser comprises an outlet 9 for the crystal slurry and an outlet 10 for the gas after evaporation of the cooling liquid, respectively located at the bottom and the top of each downwards flowing section 6.

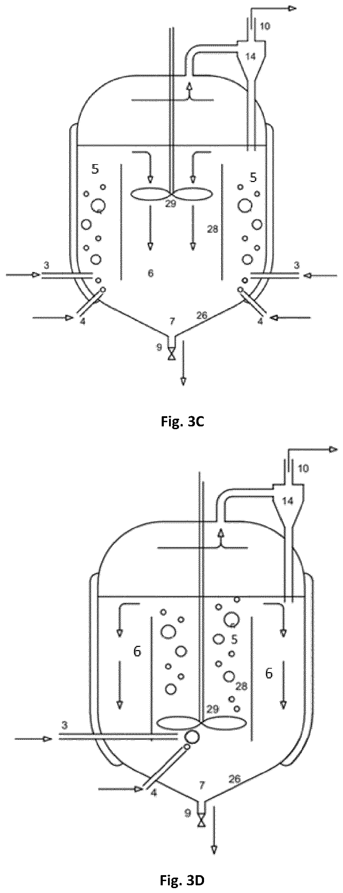

Referring to Figures 3C and 3D, in a particular aspect of the disclosure, a crystalliser 1 is disclosed. This crystalliser can be understood as the extrapolation of the previously disclosed crystalliser with multiple conduits, where the conduits have now been merged into one toroidal-like conduit. The crystalliser 1 comprises a vertically positioned cylindrical vessel 26 having a cylindrical body 28 centred inside the cylindrical vessel 26 and open at both upper and lower ends. The cylindrical vessel 26 comprises a composition inlet 3 for introducing a composition comprising at least a liquid and solids dissolved in the liquid; a cooling inlet 4 for introducing a cooling liquid; one upwards flowing section 5 for cooling the upward flowing composition through contact with the co-currently upwards flowing cooling liquid; one downwards flowing section 6 for transporting a crystal slurry of crystallised solids from the composition downwards; a bottom section 7 joining the downwards flowing section 6 and the upwards flowing section 5; a top section 8 joining the upwards flowing section 5 and the downwards flowing section 6; an outlet 9 at the bottom section 7 for collecting the crystal slurry; and an outlet 10 at the top section 8 for collecting the cooling liquid in its gaseous state, after it has been converted into a gaseous state through heat exchange with the composition; wherein the composition and the cooling liquid are respectively introduced in the composition inlet (3) and the cooling inlet (4) such that the composition and the cooling liquid flow in the loop-shaped conduit (2) in a co-current manner.

Contrary to the prior art GB932215 (Cerny, 1960) and US4452621, the composition and the cooling liquid flow co-currently in the crystalliser 1 of the disclosure. Indeed, the crystalliser 1 comprises a vertically positioned loop-shaped conduit 2. The cooling liquid and the composition are respectively introduced in the inlets 4 and 3. The liquids from the crystal slurry, after separation of the crystal slurry, returning from the downwards flowing section 6 to the upwards flowing section 5, drive the composition upwards in the upwards flowing section 5. In addition, as the cooling liquid is warmed-up upon contact with the composition, part of it starts evaporating and producing gas bubbles. The result is, therefore, that both the cooling liquid, as part of it evaporates, and the composition flow in an upwards direction, in the upwards flowing section 5 of the loop-shaped conduit 2. Both inlets 3 and 4 are preferably located in the upwards flowing section and the inlet 4 is preferably located upstream the inlet 3, in order to facilitate the upwards driving of the composition, in the upwards flowing section 5 being driven upwards. Optionally, the presence of a pump 27 may further facilitate the flow in the upwards flowing section. The composition is being cooled down, through contact with the cooling liquid, the solids dissolved in the composition start crystallising, resulting in the production of a crystal slurry.

The composition and the cooling liquid eventually reach the top of the loop-shaped section 2, the top section 8. At this top section 8 are present the composition and cooling liquid, as well as a gas resulting from the evaporation of the cooling liquid and crystals, resulting from the crystallisation of the dissolved solids in the composition. Said otherwise, at this top section 8, there is a mixture of the crystal slurry and a gas and the liquids of the crystal slurry comprise any remaining non-evaporated cooling liquid and the composition with non-crystallised, therefore still dissolved, solids.

As the gas is lighter than the crystal slurry, the gas escapes through the outlet 10, resulting in the convenient separation of the gas from the crystal slurry. On the other hand, the crystal slurry flows downwards, in the downwards flowing section 6 of the loop-shaped conduit 2. Once the crystal slurry reaches the bottom section 7 of the loop-shaped conduit 2, the crystals heavier than the liquids of the crystal slurry, settle down and can be collected at the outlet 9. The crystals lighter than the liquids of the crystal slurry do not settle and be recycled in the loop. It further results a buoyancy effect which drives the liquids and the lighter crystals of the crystal slurry towards the upwards flowing section 5. As a result, the liquids and some crystals of the crystal slurry are recycled within the loop-shaped conduit 2, which maximises the yield of crystals: dissolved solids not crystallised in a single loop trajectory can crystallise, from the recycled crystals acting as nucleation seeds, in a subsequent loop trajectory. The buoyancy effect and the recycling of the liquids and some crystals of the crystal slurry further provides additional force for driving the cooling liquid and the composition upwards, in the upwards flowing section 5. Optionally, the separation of the crystals at the bottom section 7, rather than being accomplished naturally based on the weight of the crystals, may be accomplished by classifying means. The classifying means classify the crystals according to their size and separate the crystals of a sufficiently large size, as established by the end user of the crystalliser, and direct those crystals to the outlet 9,whereas the remaining crystals are recycled in the loop-shaped conduit 2.

The crystalliser therefore has the advantages that, through the loop-shaped conduit, both easy gas separation from the crystal slurry and maximisation of the crystallisation yield are achieved.

In a particular embodiment, the crystalliser 1 comprises one downwards flowing section 6 inside the cylindrical vessel 28 centred in the cylindrical body 26 and two upwards flowing sections 5, that is one on each side of the cylindrical vessel 28 centred in the cylindrical body 26 (Figure 3C). Each upwards flowing section comprises an inlet for the composition 3 and an inlet for the cooling liquid 4, located in the bottom section 7 of the crystalliser. The inlet for the cooling liquid 4 is located upstream the inlet for the composition 3. The cylindrical vessel 28 centred in the cylindrical body 26 comprises an agitator 29. The crystallizer comprises an outlet 9 for the crystal slurry and an outlet 10 for the gas after evaporation of the cooling liquid, respectively located at the bottom and the top of the downwards flowing section. The agitator is located inside the cylindrical vessel 28 from 15% to 40%, preferably from 20% to 35%, even more preferably from 25% to 30% of the height of the cylindrical vessel 28 upstream the top of the cylindrical vessel 28. With the agitator positioned at this height, the mixing of the incoming crystal slurry is maximised at the same time as back-pressure that would result in the crystal slurry being returned to the downwards flowing section is minimised.

In a particular embodiment, the crystalliser 1 comprises one upwards flowing section 5 inside the cylindrical vessel 28 centred in the cylindrical body 26 and two downwards flowing sections 6, that is one on each side of the cylindrical vessel 28 centred in the cylindrical body 26 (Figure 3C). (Figure 3C). The upwards flowing section comprises an inlet for the composition 3 and an inlet for the cooling liquid 4, located in the bottom section 7 of the crystalliser. The cylindrical vessel 28 centred in the cylindrical body 26 further comprises an agitator 29. The crystallizer comprises an outlet 9 for the crystal slurry and an outlet 10 for the gas after evaporation of the cooling liquid, respectively located at the bottom and the top of the downwards flowing section. The agitator is located inside the cylindrical vessel 28 from 15% to 40%, preferably from 20% to 35%, even more preferably from 25% to 30% of the height of the cylindrical vessel 28 above the bottom of the cylindrical vessel 28. With the agitator positioned at this height, the mixing of the incoming composition and cooling liquid is maximised at the same time as back-pressure that would limit the incoming flows of composition and cooling liquid is minimised.

Referring to Figure 2, according to one embodiment of any of the crystallisers of the disclosure, the crystalliser further comprises a gas compressor 11 comprising an inlet 12 in fluid communication with the outlet 10 at the top section 8, for a gas to be compressed, and an outlet 13 in fluid communication with the cooling inlet 4, for the gas to be compressed and thereby converted into the cooling liquid. When such a gas compressor 11 is connected in this manner to the top section 8, the gas coming out of the outlet 10 can be compressed and fed to the inlet 4, such that the amount of gases being compressed to generate the cooling liquid is minimized. In other words, a gas compressor allows for the recycling of the off-gases at the outlet 10, and, after being compressed into a liquid, fed to the loop-shaped conduit 2.

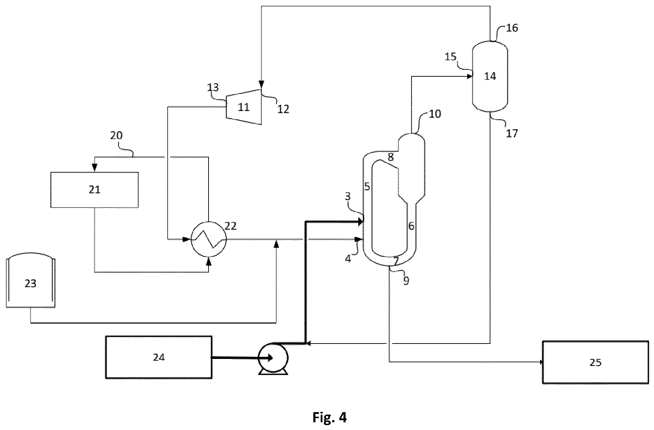

In addition and as illustrated in Figure 4, the method of the disclosure may comprise a cooling system 20 comprising a cooler 21 and means for exchanging heat 22 between the coolant from the cooler 21 and the cooling liquid. The cooling liquid is thereby cooled to a temperature below the nucleation temperature for the solids to be crystallised, such as ranging from -275 °C to -5 °C, or from -40 °C to -5 °C, or from -15 °C to -5 °C. Such cooling system will prevent the evaporation of the cooling liquid, prior to its introduction in the inlet 3 of the crystalliser 1.

Referring to Figures 1, 2, 3A and 3B, according to one embodiment of any of the crystallisers of the disclosure, the crystalliser further comprises a separator 14 for separating the gas collected at the outlet 10, at the top section 8, from any crystal slurry carried over at the outlet 10. The separator 14 comprises an inlet 15 in fluid communication with the outlet 10 at the top section 8; and, in particular, a first outlet 16 for a gas in fluid communication with the inlet 12 of the gas compressor 11 and a second outlet 17 for the crystal slurry in fluid communication with the composition inlet 3 of the crystalliser 1. In the presence of a such a separator 14, the crystallisation yield is maximised since the crystal slurry carried over at the outlet 10 is recycled to the loop-shaped conduit 2. While being reprocessed in the loop-shaped conduit, the crystals of the crystal slurry may settle down at the bottom section 7 for being collected at the outlet 9. Furthermore, the presence of the separator prevents, in cases where there also is a gas compressor 11 and the gases at the outlet 10 are, as described above, recycled to gas compressor 11, the carry-over of solids to the gas compressor 11 which would damage the gas compressor 11.

According to one embodiment of any of the crystallisers of the disclosure, the crystalliser further comprises heating means (not shown) for supplying heat to at least part of the walls of the upwards flowing section 5. As defined herein, heating means can be selected from a heating mantel or means for injecting steam or means for injecting boiling water. In particular, the heating means are a heating mantel. The heating means prevents that the temperature on the walls of the upwards flowing reaches a temperature that is colder than the optimal range of from -275 °C to 5 °C, or from - 100 °C to 5 °C, or from -40 °C to 5 °C, or from -30 °C to 5 °C, - or from -20 °C to -5 °C, or from -15 °C to -5 °C. When the temperature onto the walls of upwards flowing section is maintained to a value ranging from 5 °C to 40 °C, or 10 °C to 40 °C, or 15 °C to 40 °C, or 20 °C to 40 °C, or 30 °C to 40 °C, the build-up of crystals onto the walls of the upwards flowing section 5 is prevented such that the crystals can be effectively collected at the outlet 9 at the bottom section 7. In addition, preventing the build-up of crystals onto these walls facilitates the flow in the upwards flowing section 5 and reduces the chances of blockage due to crystal aggregation.

In particular, the upwards flowing comprises means for measuring the temperature, such as temperature sensors. In this manner, this is possible to identify when the temperature in the upwards flowing section is colder than the optimal range of -275 °C to 5 °C, or from -100 °C to 5 °C, or from -40 °C to 5 °C, or from -30 °C to 5 °C, - or from -20 °C to -5 °C, or from -15 °C to -5 °C and, thereby, identify when heat should be supplied by the heating means 18 to at least part of the walls of the upwards flowing section 5.

Referring to Figures 1, 2, 3A and 3B, according to one embodiment of any of the crystallisers of the disclosure, the crystalliser further comprises breaking means 19 in the vicinity of the outlet 9 at the bottom section, for breaking the crystals of the crystal slurry. As defined herein, breaking means can be selected from a macerator, an agitator or a macerator. In particular, the breaking means is a macerator. In the presence of such breaking means, crystals are broken down to nucleation seeds, such that, upon recycling of the seeds into the loop-shaped conduit 2, crystallisation of solids from the composition is favoured.

### Method for crystallising

Reference is made to Figure 4. In a second aspect of the disclosure, a method for crystallising solids from a composition comprising at least a liquid and solids dissolved in the liquid, is disclosed. The method comprises the steps of: a) feeding a cooling liquid to a cooling inlet 4 and a composition comprising at least a liquid and solids dissolved in the liquid to a composition inlet 3 of a crystalliser 1 of the present disclosure; b) collecting the cooling liquid converted into a gaseous state at the outlet 10 at the top section 8 of the crystalliser 1; and c) collecting a crystal slurry at the outlet 9 at the bottom section 7 of the crystalliser 1. As described in connection with the loop-shaped conduit 2, the presence of this loop-shaped conduit 2 in the method of the disclosure results in the method having both advantages of easy gas separation from the crystal slurry and maximisation of the crystallisation yield.

The cooling liquid should be a cooling liquid that, in operation under normal operating conditions, is converted into a gaseous state and is collected at the outlet 10 at the top section 8 of the crystalliser . It may be selected from the group of liquid CO₂, liquid propane, liquid butane, mixtures of liquid propane and liquid butane, freons or liquid N₂O. The temperature of the cooling liquid may range from -275 °C to 5 °C, or from -100 °C to 5 °C, or from -40 °C to 5 °C, or from -30 °C to 5 °C, - or from -20 °C to -5 °C, or from -15 °C to -5 °C. The pressure at which the cooling agent exists in the liquid state or, said otherwise, at which the cooling agent is a cooling liquid, may be in the range of from 2 to 35 bar, or from 5 to 35 bar, or from 10 to 35 bar, or from 12 to 30 bar, or from 15 to 25 bar.

According to one embodiment of the method of the disclosure, the cooling liquid in step a) is liquid CO₂ and is pressurized to a pressure ranging from 10 to 35 bar. Under those conditions, the crystallisation of the solids dissolved in the composition is maximised. In addition to existing in the liquid form at temperature and pressure conditions suitable for achieving crystallisation of the solids dissolved in the composition, liquid CO₂ offers the benefit of a safe crystallisation process. Indeed, contrary to organic cooling liquids, in the case that the composition comprises dissolved nitrate-based compounds, the formation of explosive organic nitrates will not take place in the presence of liquid CO₂.

Reference is made to Figures 1, 2, 3A and 3B. Optionally, the method may comprise a pumping step in which the content in the bottom section 7 of the crystalliser is pumped using a pump 26 towards the upwards flowing section 5, thereby facilitating the flow in the upwards flowing section 5. Optionally, the method comprises a classifying step, in which the crystals at the bottom section 7 of the crystalliser 1 are classified using means for classifying (not shown), such that the crystals of a sufficiently large size, as determined by the end user of the method, are collected at the outlet 9 and the smaller crystals are recycled as seeds in the upwards flowing section 5, thereby facilitating crystal growth in this section.

Reference is made to Figures 3C and 3D. Optionally, the method further comprises an agitation step using an agitator 29 when the method is used in conjunction with a crystalliser 1 according to a particular aspect of the disclosure. Such agitation step assists in the mixing of the composition and the cooling liquid, thus favouring the cooling of the composition and, in turn, favouring the crystallisation of the solids dissolved in the composition.

Reference is made to Figure 4. According to one embodiment of the method of the disclosure, the method further comprises the steps of, in a crystalliser 1 according to any of the crystallisers of the disclosure and comprising a gas compressor 11, d) compressing the gas collected in step b) using the gas compressor 11, thereby obtaining a cooling liquid; and e) repeating step a) with the cooling liquid obtained in step d). The person skilled in the art will understand that either the gas generating the cooling liquid can be compressed just prior to the introduction of the cooling liquid in the inlet 3 of the crystalliser 1, or a volume of cooling liquid can be generated prior to the introduction of the cooling liquid in the loo-shaped circuit 2 and stored in a storage tank, shown as 23, at appropriate temperature such as -275 °C to 5 °C, or from -100 °C to 5 °C, or from -40 °C to 5 °C, or from -30 °C to 5 °C, - or from -20 °C to -5 °C, or from -15 °C to -5 °C and pressure conditions such as 2 to 35 bar, or from 5 to 35 bar, or from 10 to 30 bar, or from 12 to 30 bar, or from 15 to 25 bar. When the gas collected at the outlet 10 is re-used for compression in the gas compressor 11, less gas has to be used for producing the cooling liquid and the gaseous emissions are controlled. This means in turn that the gas consumption is minimised, which represents an economical benefit, and also the process is more environmentally friendly with less gas being emitted.

In addition and as illustrated in Figure 4, the method of the disclosure may comprise a step d') in which the cooling liquid is cooled to a temperature ranging from as -275 °C to 5 °C, or from -100 °C to 5 °C, or from -40 °C to 5 °C, or from -30 °C to 5 °C, - or from -20 °C to -5 °C, or from -15 °C to -5 °C, through heat exchange in system 22, with the cooler 20 of a cooling system 21, in order to prevent evaporation of the liquid prior to its introduction in the inlet 3 of the crystalliser 1. If required to reach the desired temperature for the cooling liquid, an additional cooling system, for example by heat exchange, may be inserted between the outlet 13 the heat exchange 22.

Reference is made to Figure 4. According to one embodiment of the method of the disclosure, the method further comprises the steps of, in a crystalliser 1 according to any of the crystallisers of the disclosure and comprising a separator 14, f) separating the gas collected at the outlet 10 from any crystal slurry carried over at the outlet 10 in the separator 14. Once the gas and the crystal slurry carried over are separated, as described above, the resulting crystal slurry may be fed to the inlet 3 in the upwards flowing section 5, whereas the gas may be fed to the gas compressor 11 in order to minimize the amount of gas being used for generating the cooling liquid.

According to one embodiment of the method of the disclosure, the method further comprises the steps of, in a crystalliser 1 according to any of the crystallisers of the disclosure and comprising heating means (not shown), g) supplying heat by using the heating means (not shown) to at least part of the walls of the upwards flowing section 5. The step g) prevents that the temperature on the walls of the upwards flowing reaches a temperature that is colder than the optimal range of from -275 °C to 5 °C, or from -100 °C to 5 °C, or from -40 °C to 5 °C, or from -30 °C to 5 °C, - or from -20 °C to -5 °C, or from -15 °C to -5 °C. When the temperature onto the walls of upwards flowing section is maintained to a value ranging from 5 °C to 40 °C, or 10 °C to 40 °C, or 15 °C to 40 °C, or 20 °C to 40 °C, or 30 °C to 40 °C, the build-up of crystals onto the walls of the upwards flowing section 5 is prevented such that the crystals can be effectively collected at the outlet 9 at the bottom section 7. In addition, preventing the build-up of crystals onto these walls facilitates the flow in the upwards flowing section 5 and reduces the chances of blockage due to crystal aggregation.

In particular, the method further comprises a step g') in which the temperature in the upwards flowing section is measured using means for measuring the temperature, such as temperature sensors. Through the step g'), this is possible to identify when the temperature in the upwards flowing section is colder than the optimal range of from -275 °C to 5 °C, or from -100 °C to 5 °C, or from -40 °C to 5 °C, or from -30 °C to 5 °C, - or from -20 °C to -5 °C, or from -15 °C to -5 °C and, thereby, identify when step g) should be performed.

According to one embodiment of the method of the disclosure, the method further comprises the steps of, in a crystalliser 1 according to any of the crystallisers of the disclosure and comprising breaking means 19, j) breaking the crystals of the crystal slurry by using the breaking means 19. In the presence of such step j), crystals are broken down to nucleation seeds, such that, upon recycling of the seeds into the upwards flowing section 5, crystallisation of solids from the composition is favoured.

Referring to Figure 4, according to one embodiment of the method of the disclosure, the composition is obtained by digesting a phosphate rock or a mixture of phosphate rocks in nitric acid and the crystals formed are calcium nitrate tetra-hydrate crystals. The method of the disclosure may indeed be used for performing the crystallisation step in the nitro-phosphate, Odda process. The nitro-phosphate process comprises six main steps. In a first step (digestion step), phosphate rock is digested in nitric acid yielding a digestion liquor at a temperature of 65°C, which can be stored in a tank such as 24 in Figure 4. In a second step (crystallization step), calcium nitrate tetrahydrate is crystallized out of the digestion liquor yielding a crystal slurry. In a third step (separation step), the crystallized calcium nitrate is separated by a technique such as filtration (calcium nitrate tetrahydrate crystals are shown as 25 in Figure 4) or centrifugation, resulting in calcium nitrate tetrahydrate crystals being separated from the liquid of the crystal slurry, referred to as the mother liquor. In a fourth step (neutralization step), the mother liquor is neutralized using ammonia up to a pH of approximately 5.8. In a fifth step (particulation), the neutralized mother liquor is particulated into the final product (e.g. for use as an NP-fertilizer). Potassium salts can be added during the neutralization process or to the neutralized mother liquor. When the particulation is performed by prilling, an evaporation step is performed upfront the addition of potassium salts, in order to reach a water content sufficiently low to perform prilling. In a sixth step (coating step), the particles can be subsequently coated, for example with a coating agent suitable for reducing moisture absorption and for, thereby, ensuring proper physical properties for the particles. The second, crystallisation step of the nitro-phosphate process may be performed using the method of the disclosure.

The current crystallisers used in the nitro-phosphate process are traditionally apparatuses such as described in GB1012721A (Laporte Chemicals Ltd., 1961) and comprising cooling coils, over which the heat of the digestion liquor is exchanged , which results in the crystallization of calcium nitrate tetrahydrate. The replacement of heat transfer through heating coils with the direct physical contact between the cooling liquid and the digestion liquor allows for the reduction of the costs associated to the crystalliser itself and also to the operation of the crystalliser. This replacement further results in an improved crystallization efficiency. In addition, by using any crystalliser of the disclosure, the digestion liquor and the calcium nitrate tetrahydrate crystal slurry are efficiently separated. Consequently, the crystal slurry is produced in a more concentrated form in the method of the disclosure, with respect to the traditional method. As a result, the separation of the crystals from the crystal slurry is facilitated.

The method of the disclosure can be performed batchwise or continuously. According to one embodiment of the method of the disclosure (batchwise), step a) is first performed, followed by steps b) and c), which may be performed simultaneously. According to another embodiment of the method of the disclosure (continuous), steps a), b) and c) are performed simultaneously. A particular advantage of the method of the disclosure is that it allows for continuous feeding of composition and cooling liquid to the inlets 3 and 4 respectively upon continuous collection of the crystal slurry at the outlet 9 and continuous collection of the gas at the outlet 10. Therefore, the method for crystallising does not need to be applied in a batchwise manner but can be performed as a continuous method.

### Use of the crystalliser in the method for crystallising

In a third aspect of the disclosure, the use of any of the crystallisers of the disclosure, for performing a method for crystallising according to the disclosure, is disclosed.

### Example 1

Reference is made to Figure 1. A nitrophosphate digestion liquor comprising from 7.5 weight% nitric acid, from 14.4 weight% phosphoric acid and 45.1 weight% dissolved calcium nitrate tetrahydrate is continuously fed to the composition inlet 3 of a loop-shaped conduit 2 at a flow rate of 36.6 kg/s. The loop-shaped conduit 2 comprised a composition inlet 3 for introducing a composition comprising at least a liquid and solids dissolved in the liquid; a cooling inlet 4 for introducing a cooling liquid, located upstream the composition inlet 3; one upwards flowing section 5, comprising the composition inlet 3 and the cooling inlet 4, for cooling the upwards flowing composition through contact with the co-currently upwards flowing cooling liquid; one downwards flowing section 6 for transporting a crystal slurry of crystallised solids from the composition downwards; a bottom section 7 joining the downwards flowing section 6 and the upwards flowing section 5; a top section 8 joining the upwards flowing section 5 and the downwards flowing section 6; an outlet 9 at the bottom section 7 for collecting the crystal slurry; and an outlet 10 at the top section 8 for collecting the cooling liquid in its gaseous state, after it has been converted into a gaseous state through heat exchange with the composition. Liquid CO₂ at a pressure of 30 bar and a temperature of -5.5 °C is also continuously fed as the cooling liquid in the loop-shaped conduit, at the cooling inlet 4 of the loop-shaped conduit 2, at a flow rate of 36.6 kg/s. Gaseous CO₂ is continuously collected at the outlet 10 at the top section 8 of the loop-shaped conduit 2 and a calcium nitrate tetrahydrate crystal slurry is continuously collected at the outlet 9 at the bottom section 7 of the loop-shaped conduit 2.

### Example 2

Reference is made to Figure 2. The experiment described under example 1 is repeated with the crystalliser having additional elements to the loop-shaped conduit 2. As a first additional element, a crystalliser comprising the loop-shaped conduit 2 further comprises a gas compressor 11. As a second additional element, the crystalliser further comprises a separator 14. As a third additional element, the crystalliser comprises a heating mantel 18 as heating means, surrounding the walls of the upwards flowing section 5. Finally and as a fourth additional element, the crystalliser comprises a macerator 19 as breaking means, located in the vicinity and on the right side of the outlet 9 at the bottom section 7. Gaseous CO₂ and carry over of calcium nitrate tetrahydrate crystal slurry, collected at the outlet 10 at the top section 8, are separated in the separator 14. The separated gaseous CO₂ is then fed to the compressor 11 in order for additional liquid CO₂ to be produced as a source of cooling liquid. The carry-over of calcium nitrate tetrahydrate crystal slurry is fed to the composition inlet 3 of the loop shaped conduit 2. In this manner, the yield of calcium nitrate tetrahydrate crystals in maximised. Heat is provided through the heating mantel 18 to the walls of the upwards flowing section 5, which prevents formation of calcium nitrate tetrahydrate crystals on those walls and allows for a continuous and non-obstructed flow in the upwards flowing section 5.

## Claims

1. A vertically positioned crystalliser (1) comprising at least one upwards flowing section (5) for cooling the upwards flowing composition physically separated from at least one downwards flowing section (6) for transporting a crystal slurry of crystallised solids from the composition downwards; the crystalliser (1) further comprising:
• at least one composition inlet (3) for introducing a composition comprising at least a liquid and solids dissolved in said liquid;
• at least one cooling inlet (4) for introducing a cooling liquid;
• a bottom section (7) where the downwards flowing section (6) and the upwards flowing section (5) fluidically join comprising at least one outlet (9) for collecting the crystal slurry; and;
• a top section (8) where the upwards flowing section (5) and the downwards flowing section (6) fluidically join comprising at least one outlet (10) for collecting the cooling liquid in gaseous state;
wherein the at least one composition inlet (3) and the at least one cooling inlet (4) are located in the vertically positioned crystalliser (1) such that in the at least one upwards flowing section (5) the cooling liquid and the composition are co-currently flowing upwards.

2. The crystalliser (1) according to claim 1 comprising:
• at least one vertically positioned loop-shaped conduit (2), said loop-shaped conduit (2) comprising the at least one upwards flowing section (5); or
• two or more vertically positioned loop-shaped conduits (2) comprising two or more upwards flowing sections (5) and a single common downwards flowing section (6); or
• two or more vertically positioned loop-shaped conduits (2) comprising two or more downwards flowing sections (6) and a single common upwards flowing section (5).

3. The crystalliser (1) according to claim 1, comprising a vertically positioned cylindrical vessel (26) comprising a cylindrical body (28) centred inside said cylindrical vessel (26) and open at both upper and lower ends physically separating the upwards flowing section (5) from the downwards flowing section (6).

4. The crystalliser (1) according to any one of claims 1 to 3, wherein the composition inlet (3) and the cooling inlet (4) are located in the upwards flowing section (5).

5. The crystalliser (1) according to claim 4, wherein the cooling inlet (4) is located upstream from the composition inlet (3).

6. The crystalliser (1) according to any one of claims 1 to 5, further comprising a gas compressor (11) upstream from outlet (10), for compressing cooling liquid in gaseous state and reintroducing said cooling liquid in said crystallizer (1) through cooling inlet (4).

7. The crystalliser (1) according to any one of claims 1 to 6 further comprising a separator (14) for separating the gas collected at the outlet (10), at the top section (8), from any crystal slurry carried over at the outlet (10), wherein the separator (14) comprises:
an inlet (15) in fluid communication with the outlet (10) at the top section (8); and, in particular;
a first outlet (16) for a gas in fluid communication with the inlet (12) of the gas compressor (11); and
a second outlet (17) for the crystal slurry in fluid communication with the composition inlet (3) of the crystalliser (1).

8. The crystalliser (1) according to any one of claims 1 to 7, further comprising heating means (18) for supplying heat to at least part of the walls of the upwards flowing section (5).

9. The crystalliser (1) according to any one of claims 1 to 8, further comprising breaking means (19) in the vicinity of outlet (9) at the bottom section (7), for breaking the crystals of the crystal slurry.

10. A method for crystallising solids from a composition comprising at least a liquid and solids dissolved in the liquid, comprising the steps of:
(a) feeding a cooling liquid to a cooling inlet (4) and the composition comprising at least a liquid and solids dissolved in the liquid to a composition inlet (3) of a crystalliser (1) according to any one of claims 1 to 5;
(b) collecting the cooling liquid converted into a gaseous state at the outlet (10) at the top section (8) of the crystalliser (1); and
(c) collecting a crystal slurry at the outlet (9) at the bottom section (7) of the crystalliser (1).

11. The method according to claim 10, wherein the cooling liquid in step (a) is liquid CO₂ and is pressurized to a pressure ranging from 10 to 35 bars.

12. The method according to any one of claims 10 to 11, in a crystalliser (1) according to any of claims 6 to 9, further comprising the steps of:
(d) compressing the gas collected in step (b) using a gas compressor (11), thereby obtaining a cooling liquid; and
(e) repeating step (a) with the cooling liquid obtained in step (d).

13. The method according to any one of claims 10 to 12, in a crystalliser (1) according to any of claims 7 to 9, further comprising the steps of:
(f) separating the gas collected at the outlet (10) from any crystal slurry carried over at the outlet (10) in a separator (14).

14. The method according to any one of claims 10 to 13, in a crystalliser (1) according to any of claims 8 to 9, further comprising the step of:
(g) supplying heat by using heating means (18) to at least part of the walls of the upwards flowing section (5).

15. The method according to any one of claims 10 to 14, in a crystalliser (1) according to claim 9, further comprising the step of:
(j) breaking the crystals of the crystal slurry by using breaking means (19).

16. The method according to any one of claims 10 to 15, wherein the composition is obtained by digesting a phosphate rock or a mixture of phosphate rocks in nitric acid and wherein the crystals formed are calcium nitrate tetra-hydrate crystals.

17. The method according to any one of claims 10 to 16, performed in a continuous manner and wherein steps (a), (b) and (c) are performed simultaneously.

18. Use of a crystalliser (1) according to any one of claims 1 to 9 for performing a method for crystallising according to any one of claims 10 to 17.

19. Use according to claim 18 for the crystallisation of calcium nitrate tetrahydrate crystals from a nitrophosphate digestion liquor comprising nitric acid, phosphoric acid and dissolved calcium nitrate tetrahydrate.
